# EUROPÄISCHE PATENTSCHRIFT

(11) **EP 0 621 964 B1**
(45) Veröffentlichungstag und Bekanntmachung des Hinweises auf die Patenterteilung: **15.11.1995**
(21) Anmeldenummer: 93901716.6
(22) Anmeldetag: 21.12.1992
(51) Int. Cl.: G05D 7/01, F04D 15/00

(54) **EINRICHTUNG ZUR REGELUNG DES FÖRDERSTROMS EINER KREISELPUMPE IN GESCHLOSSENEM ROHRNETZ**
DEVICE FOR REGULATING THE FLOW RATE OF A CENTRIFUGAL PUMP IN A CLOSED NETWORK OF PIPES
REGULATEUR DU DEBIT D'UNE POMPE CENTRIFUGE DANS UN RESEAU FERME DE TUYAUTERIE

(30) Priorität: 17.01.1992 DE 4201100
(43) Veröffentlichungstag der Anmeldung: 02.11.1994
(73) Patentinhaber: KSB Aktiengesellschaft, 67227 Frankenthal (DE)
(72) Erfinder: HERGT, Peter, D-6700 Ludwigshafen (DE)
(86) Internationale Anmeldenummer: EP9202970
(87) Internationale Veröffentlichungsnummer: WO9314450

(56) Entgegenhaltungen:
- DE-A- 2 113 875
- DE-A- 3 101 516
- GB-A- 613 892
- US-A- 4 166 310
- US-A- 5 026 256

## Beschreibung

Die Erfindung betrifft eine Einrichtung zur Regelung des Förderstroms der in einem geschlossenen Rohrnetz durch eine Kreiselpumpe umgewälzten Flüssigkeit, insbesondere zur Regelung des Wasserumlaufs in einer Heizungsanlage.

In geschlossenen Rohrnetzen, wie sie beispielsweise Heizungsanlagen darstellen, bestimmt der Bedarf der in das Rohrnetz eingeschalteten Verbrauchsstellen den sich ändernden Durchflußwiderstand einer gesamten Anlage. So sind die Verbrauchsstellen einer Heizungsanlage deren Heizkörper, wobei die an den jeweiligen Wärmebedarf angepaßten Heizkörperventile einen mehr oder weniger großen Durchflußwiderstand verursachen.

Da die angesprochenen Kreislaufsysteme auf einen maximalen Förderstrom ausgelegt sein müssen, vielfach aber nur in einem Teillastbereich arbeiten, ergibt sich für die Beziehung zwischen dem erforderlichen Förderdruck und dem Förderstrom der Kreiselpumpe eine in Richtung des Nullförderstromes fallende Charakteristik. Die bisher in solchen Kreisläufen eingesetzten Kreiselpumpen haben jedoch eine gegen den Förderstrom Null ansteigende Charakteristik. Wollte man eine solche Kreiselpumpe in der Anlage mit gleichbleibender Drehzahl betreiben, so mußte die Differenz zwischen dem von der Pumpe erzeugten und dem jeweils erforderlichen Druck abgedrosselt werden, wodurch ein beachtlicher Energieverlust entstand.

Für Heizungsanlagen wurden bereits verschiedene Regelsysteme entwickelt, um eine komfortable und kostengünstige Bedarfsanpassung zu erhalten. Als mechanische Lösung ist die sogenannte Bypass-Regelung bekannt. Hierbei wird durch eine Rückführleitung ein Teil des Förderstromes auf der Druckseite der Pumpe entnommen und der Saugseite wieder zugeführt. Diese Maßnahme reduziert zwar den Nutzförderstrom der Anlage, die Anlagenkennlinie selbst verschiebt sich jedoch zu größeren Förderströmen hin.

Zum gegenwärtigen Zeitpunkt haben sich Regelsysteme durchgesetzt, die die Drehzahl der Kreiselpumpe regeln, um damit eine weitgehende Anpassung an verschiedene Steuergrößen, wie den Differenzdruck, die Außen-, die Vorlauf- oder die Rücklauftemperatur, zu erreichen. Die Regelung erfolgt entweder durch Umschaltung auf verschiedene vorgegebene Drehzahlen oder, mit entsprechend erhöhtem Aufwand, stufenlos. Für die Drehzahlregelung allgemein gilt, daß sie gegenüber den oben betrachteten Einrichtungen zur Regelung des Förderstroms mit geringen Verlusten behaftet ist. Sie ist allerdings nicht gänzlich verlustlos. Im übrigen müssen auch bei ihr Teile der Druckdifferenz abgedrosselt werden.

Eine Vorrichtung zum Pumpen von Flüssigkeiten in eine Leitungsanlage ist aus der DE-A 2-113-875 bekannt.

Der Erfindung liegt die Aufgabe zugrunde, eine Einrichtung der eingangs genannten Art zu schaffen, die sich mit geringem technischem Aufwand bei Vermeidung nennenswerter Verluste an die sich in einer Anlage ergebenden Änderungen des Betriebszustandes anpaßt.

Diese Aufgabe wird erfindungsgemäß dadurch gelöst, daß die Kreiselpumpe in einem Bereich der die Förderhöhe (H) über dem Förderstrom (Q) darstellenden Pumpenkennlinie betrieben wird, der eine in Richtung des Nullförderstroms (Q = 0) abfallende Charakteristik besitzt.

Die Unteransprüche nennen verschiedene vorteilhafte Ausgestaltungen der Erfindung.

So wird für die erfindungsgemäße Einrichtung die Verwendung einer Kreiselpumpe mit Pumpenkennlinie vorgeschlagen, deren Förderhöhe bei einem Förderstrom von Null etwa 80 % der Förderhöhe im Auslegungspunkt der Kreiselpumpe beträgt. Dies ergibt vor allem bei Heizungsanlagen eine besonders gute Anpassung an die dort gegebenen Betriebsbedingungen.

Eine der erfindungsgemäßen Einrichtung dienliche Pumpenkennlinie mit fallender Charakteristik in Richtung des Förderstroms Null läßt sich in vorteilhafter Weise mit einer Kreiselpumpe verwirklichen, deren Laufradschaufeln mit einem Schaufelaustrittswinkel von 60° oder mehr, bevorzugt wird hier 90°, besitzt. Angemerkt sei, daß ein derartiges Laufrad bisher nicht gebräuchlich ist.

Unterstützend bei der Erreichung einer Pumpenkennlinie mit abfallender Charakteristik wirkt sich auch eine hohe Schaufelanzahl, beispielsweise von 11 oder mehr, aus. Der Schaufelaustrittswinkel und die Schaufelanzahl stehen in einer Wechselbeziehung, so daß bei einer Erhöhung der Schaufelzahl der Schaufelaustrittswinkel verkleinert werden könnte.

Ebenfalls unterstützend auf die Erreichung einer Pumpenkennlinie mit abfallender Charakteristik wirkt sich aus, wenn das Laufrad Eintrittskanten besitzt, welche eine nur geringe Neigung zur Drehachse der Kreiselpumpe haben. Schließlich wird noch vorgeschlagen, die Anströmkante im Übergangsbereich zwischen einem dem Laufrad nachgeschalteten Sammelraum und dem Eintritt in den Druckstutzen scharfkantig und rechtwinklig auszubilden. Auch diese Maßnahme wirkt unterstützend auf eine Absenkung der Pumpenkennlinie im Bereich des Nullförderpunktes.

Als vorteilhaft wird es angesehen, wenn der die Kreiselpumpe antreibende Elektromotor eine steife Kennlinie besitzt, so daß eine Änderung des Drehmomentes eine nur geringe Drehzahländerung verursacht. Hierdurch wird eine durch den Elektromotor verursachte unerwünschte Anhebung der Pumpenkennlinie zu kleinen Fördermengen hin auf ein tolerierbares Minimum beschränkt.

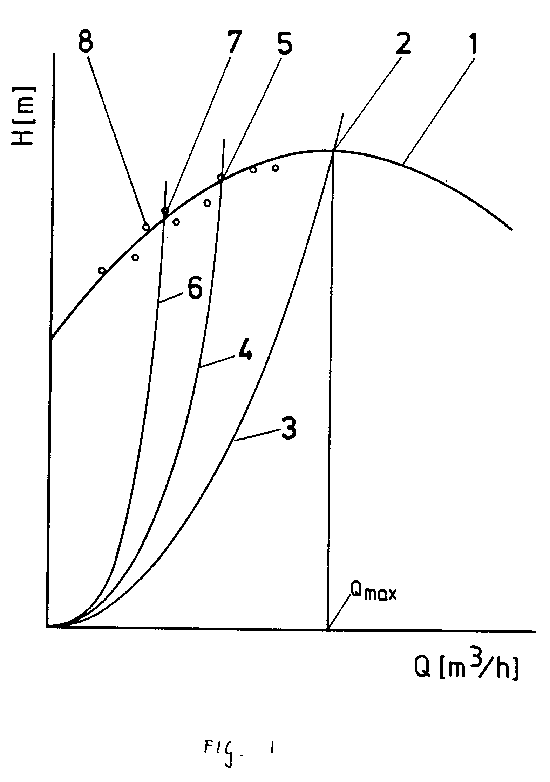

Anhand eines in der Zeichnung dargestellten Förderstrom-Förderhöhen-Diagramms einer Heizungsanlage wird die Erfindung näher erläutert.

Die Abszisse des dargestellten Diagramms trägt eine Maßeinteilung für den Förderstrom Q in m³/h, während die Ordinate die Förderhöhe H in m angibt. Die hier dargestellte Pumpenkennlinie (1) einer Heizungsumwälzpumpe besitzt einen etwa glockenförmigen Verlauf. Ihr Auslegungspunkt (2), also der Schnittpunkt der Pumpenkennlinie (1) mit der Anlagenkennlinie (3), liegt etwa im Maximum, er kann aber auch im gegen Q = 0 abfallenden Bereich liegen. Für den Pumpenbetrieb, also auch für die Regelungseinrichtung, wird nur der zwischen dem Auslegungspunkt (2) und dem Förderstrom Q = 0 gelegene Bereich der Pumpenkennlinie (1) genutzt.

Bei einer in der Heizungsanlage erfolgenden Drosselung, die beispielsweise durch das Betätigen eines Heizkörperventils erfolgt, stellt sich eine steilere Anlagenkennlinie (4) ein, welche einen neuen Schnittpunkt (5) mit der fallenden Pumpenkennlinie (1) bildet. Dieser neue Betriebspunkt weist geringere Förderhöhen und Fördermengen auf. Jede weitere Drosselung erbringt eine steilere Anlagenkennlinie (6), so daß sich ein Pumpenbetriebspunkt (7) mit noch geringeren Leistungsdaten einstellt.

Die bisher besprochenen Linien und Punkte stellen eine theoretische Grundlage dar. Die sich in einer ausgeführten Anlage wirklich ergebenden Bedarfspunkte (8) weichen hiervon geringfügig ab.

Tatsächlich ergibt sich eine automatische Anpassung, ohne daß es einer aufwendigen Regelungseinrichtung mit mechanischen und/oder elektronischen, möglichen Störungen ausgesetzten Bauteilen bedarf. Dies resultiert allein aus dem Betrieb mit fallender Pumpenkennlinie, die den Betriebszuständen entspricht, die sich in einem geschlossenen Rohrleitungssystem mit variablen Durchflußwiderständen einstellen.

## Patentansprüche

1. Einrichtung zur Regelung des Förderstroms der in einem geschlossenen Rohrnetz durch eine Kreiselpumpe umgewälzten Flüssigkeit, insbesondere zur Regelung des Wasserumlaufs in einer Heizungsanlage, **dadurch gekennzeichnet,** daß die Kreiselpumpe in einem Bereich der die Förderhöhe (H) über dem Förderstrom (Q) darstellenden Pumpenkennlinie betrieben wird, der eine in Richtung des Nullförderstroms (Q = 0) abfallende Charakteristik besitzt.

2. Einrichtung nach Anspruch 1, dadurch gekennzeichnet, daß die Kreiselpumpe eine Pumpenkennlinie aufweist, deren Förderhöhe bei einem Förderstrom von Null etwa 80 % der Förderhöhe im Auslegungspunkt der Kreiselpumpe beträgt.

3. Einrichtung nach Anspruch 1, dadurch gekennzeichnet, daß die Kreiselpumpe Laufradschaufeln mit einem Schaufelaustrittswinkel von 60° oder mehr besitzt.

4. Einrichtung nach Anspruch 3, dadurch gekennzeichnet, daß der Schaufelaustrittswinkel etwa 90° beträgt.

5. Einrichtung nach Anspruch 1, dadurch gekennzeichnet, daß die Kreiselpumpe ein Laufrad mit elf oder mehr Schaufeln besitzt.

6. Einrichtung nach Anspruch 1, dadurch gekennzeichnet, daß die Kreiselpumpe ein Laufrad besitzt, dessen Eintrittskanten eine nur geringe Neigung zur Drehachse der Kreiselpumpe haben.

7. Einrichtung nach Anspruch 1, gekennzeichnet durch eine Kreiselpumpe, bei der die Anströmkante des Sporns im Übergangsbereich zwischen dem dem Laufrad nachgeschalteten Sammelraum und dem Eintritt in den Druckstutzen auf der zum Laufrad weisenden Seite scharfkantig und rechtwinklig und auf der zum Druckstutzen weisenden Seite gerundet ausgebildet ist.

8. Einrichtung nach Anspruch 1, dadurch gekennzeichnet, daß der die Kreiselpumpe antreibende Elektromotor eine steife Kennlinie besitzt.

## Claims

1. A device for the regulation of the feed rate of liquid circulated by a centrifugal pump in a closed piping system and more particularly for the regulation of water circulation in a heating system, characterized in that the centrifugal pump is operated keeping to a pump characteristic representing the pumping head (H) divided by the feed rate (Q), which possesses a trend dropping toward zero feed rate (Q = 0).

2. The device as claimed in claim 1, characterized in that the centrifugal pump has a pump characteristic, whose head at a feed rate of zero amounts to approximately 80 % of the head at the design point of the centrifugal pump.

3. The device as claimed in claim 1, characterized in that the centrifugal pump possesses impeller blades with a blade exit angle of 60° or more.

4. The device as claimed in claim 3, characterized in that the blade exit angle amounts to approximately 90°.

5. The device as claimed in claim 1, characterized in that the centrifugal pump possesses an impeller with eleven or more blades.

6. The device as claimed in claim 1, characterized in that the centrifugal pump possesses an impeller, whose entry edges have only a small inclination of the axis of rotation of the centrifugal pump.

7. The device as claimed in claim 1, characterized by a centrifugal pump, in the case of which the incident flow edge of the spur is formed in the intermediate part between the header space, following the impeller, and the entry into the pump delivery outlet is sharp-edged and rectangular and on the side facing the pump delivery outlet is rounded.

8. The device as claimed in claim 1, characterized that the electric motor for driving the centrifugal pump has a rigid characteristic.

## Revendications

1. Dispositif de régulation du débit d'un liquide circulant dans un réseau de tuyauteries grâce à une pompe circulaire, en particulier pour la régulation du circuit d'eau dans une installation de chauffage, **caractérisé** en ce que la pompe centrifuge fonctionne dans un domaine d'une courbe débit-hauteur représentant la hauteur de refoulement (H) au-dessus du débit (Q), domaine qui présente une caractéristique descendante en direction du débit zéro (Q = 0).

2. Dispositif selon la revendication 1 caractérisé en ce que la pompe centrifuge présente une courbe débit-hauteur dont la hauteur de refoulement est d'environ 80 % de la hauteur de refoulement dans le point de détermination de la pompe centrifuge avec un débit nul.

3. Dispositif selon la revendication 1 caractérisé en ce que la pompe centrifuge possède des aubes de roue dont l'angle de sortie d'aube est de 60° ou plus.

4. Dispositif selon la revendication 3 caractérisé en ce que l'angle de sortie d'aube est de 90 ° environ.

5. Dispositif selon la revendication 1 caractérisé en ce que la pompe centrifuge possède une roue avec onze aubes ou plus.

6. Dispositif selon la revendication 1 caractérisé en ce que la pompe centrifuge possède une roue dont les arêtes d'entrée présentent une inclinaison seulement faible par rapport à d'axe de rotation de la pompe centrifuge.

7. Dispositif selon la revendication 1 caractérisé par une pompe centrifuge dans laquelle l'arête d'entrée de l'éperon dans la zone de passage entre l'espace de recueillement en aval de la roue et l'entrée dans les tuyaux de pression est coupante et à angle droit sur le côté dirigé vers la roue et est arrondie sur le côté dirigé vers le tuyau de pression.

8. Dispositif selon la revendication 1 caractérisé en ce que le moteur qui entraîne la pompe centrifuge présente une courbe raide.
